# EUROPÄISCHE PATENTSCHRIFT

(11) **EP 0 679 917 B1**
(45) Veröffentlichungstag und Bekanntmachung des Hinweises auf die Patenterteilung: **19.01.2000**
(21) Anmeldenummer: 95102617.8
(22) Anmeldetag: 24.02.1995
(51) Int. Cl.: G02B 6/44

(54) **Gehäuse für optische Komponenten**
Enclosure for optical components
Coffret pour composants optiques

(30) Priorität: 26.04.1994 DE 4415218
(43) Veröffentlichungstag der Anmeldung: 02.11.1995
(73) Patentinhaber: KRONE Aktiengesellschaft, 14167 Berlin (DE)
(72) Erfinder: Bernhardt, Susanne, Dipl. Ing., D-10707 Berlin (DE); Kahle, Eberhard, Dipl. Ing., D-12557 Berlin (DE); Grugel, Peter, Dipl. Ing., D-12207 Berlin (DE); Thiel, Axel, Dipl. Ing., D-10435 Berlin (DE); Oehlkers, Paul, Dipl. Ing., D-12169 Berlin (DE)

(56) Entgegenhaltungen:
- EP-A- 0 557 188
- EP-A- 0 608 517
- DE-U- 9 115 060
- DE-U- 9 311 129
- DE-U- 9 318 741
- FR-A- 2 704 069

## Beschreibung

Die Erfindung bezieht sich auf ein Gehäuse für optische Komponenten gemäß dem Oberbegriff des Patentanspruchs 1.

Aus der nicht vorveröffentlichten DE 43 02 837 Al ist ein Gehäuse aus Gehäuseunterteil und Deckel zur Aufnahme von optischen Komponenenten, wie Glasfasern, Kopplern und Spleißen bekannt. Das Gehäuse dient dem Schutz der Spleiß- und Kopplerstellen von Glasfaserkabeln sowie der Aufnahme der notwendigen Vorratslängen von Glasfasern in Verbindung mit den Spleiß- und/-oder Kopplerstellen. Das Gehäuse ist modular aufgebaut. Je nach Bedarf können eine unterschiedliche Anzahl von Gehäuseunterteilen ineinander gestapelt werden. Die die Gehäuseunterteile verbindenden Glasfasern werden jeweils durch die Gehäuseböden eingeleitet. Das Gehäuseunterteil ist mit in den Boden integrierten Haltern zur Aufnahme von Kopplern und Spleißen ausgestattet. Bei der Endmontage werden das Gehäuseunterteil oder mehrere Gehäuseunterteile mit dem Deckel zu einem Gehäuse bzw. einer Gehäuseeinheit verbunden.

Nachteilig bei diesem bekannten Gehäuse für optische Komponenten ist die mangelnde Flexibilität bei der Bestückung des Gehäuses. So ist die Anzahl der möglichen Spleiße durch die in den Boden integrierten Halter begrenzt. Bei einer Beschädigung der integrierten Halter muß das gesamte Gehäuseunterteil ausgetauscht werden.

In der EP-A-557 188 ist ein Gehäuse für Spleiße beschrieben, bei dem ein Halter für Spleiße alls separates Bauteil ausgebildet auf den Boden des Gehäuses aufrastbar ist.

Nachteilig bei diesen Gehäusen ist es, daß nur die Aufnahme eines Halters für Spleiße oder für Koppler vorgesehen ist, so daß weder eine Mischbelegung noch eine Kapazitätserweiterung in einem Gehäuse möglich sind.

Der Erfindung liegt von daher die Aufgabe zugrunde, ein flexibel umgestaltbares Gehäuse für optische Komponenten der gattungsgemäßen Art zu schaffen, das die Aufnahme einer größeren Anzahl von Spleißen oder eine Mischbelegung mit Spleißen und Kopplern erlaubt.

Die Lösung dieser Aufgabe ergibt sich aus den kennzeichnenden Merkmalen des Anspruchs 1. Durch die Schaffung einer Möglichkeit zur Anordnung von mehreren Haltern für Spleiße und Koppler als separate Bauteile, die auf den Boden des Gehäuses aufrastbar ausgebildet sind, können wahlweise, je nach Bedarf, zwei Halter für Spleiße oder Koppler oder ein Halter für Koppler und ein Halter für Spleiße auf den Boden des Gehäuses aufgerastet werden. Werden z.B. keine Koppler benötigt, so können zwei Halter für Spleiße eingesetzt werden. Somit wird die Anzahl der möglichen Spleiße verdoppelt. Wenn der Halter für Koppler aus dem Gehäuseunterteil entfernt wird, kann auch anstelle eines zweiten Halters für Spleiße ein Planarkoppler montiert werden. Des weiteren ist es möglich, zwei Halter für Koppler in das Gehäuseunterteil aufzurasten. Die notwendigen Spleiße werden dann durch Recoat-Spleißen realisiert. Bei einer Beschädigung des Halters für Koppler oder Spleiße kann der entsprechende Halter leicht ausgewechselt werden, ohne daß deswegen das gesamte Gehäuseunterteil ausgetauscht werden muß.

Durch die muldenförmigen Ausbildungen an der Unterseite der Halter, die zusammen mit muldenförmigen Ausbildungen am Boden des Gehäuses geschlossene Kanäle bilden, wird eine Einzelführung von Schaltadern parallel zur Längsachse des Halters unterhalb des Halters ermöglicht.

Die Erfindung ist nachfolgend anhand eines in den Zeichnungen dargestellten Ausführungsbeispieles eines Gehäuses für optische Komponenten näher erläutert. Es zeigen:

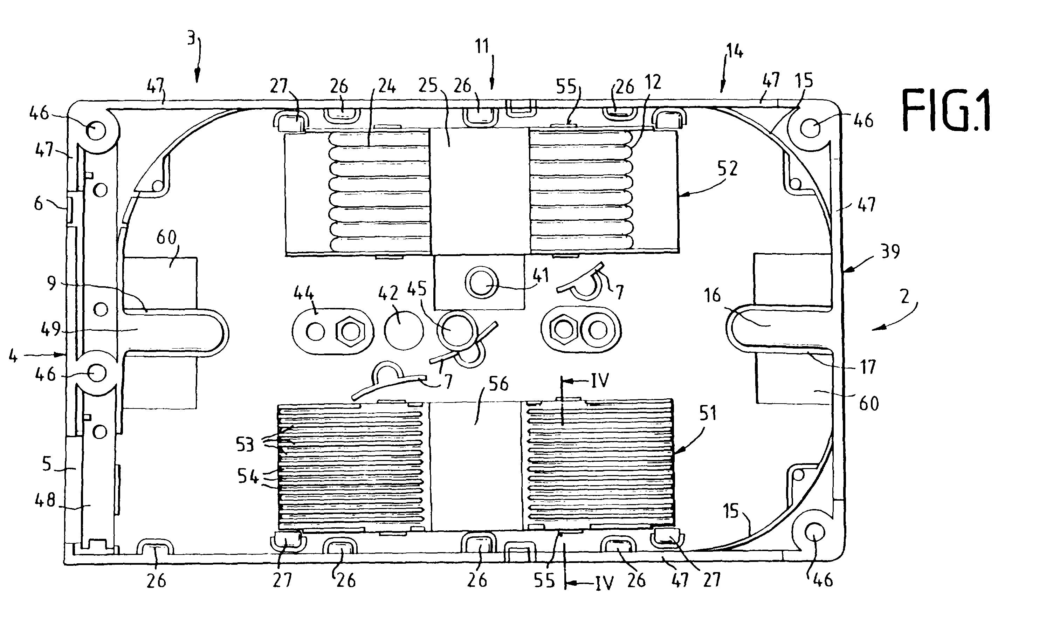

- Fig. 1: eine Draufsicht auf das Gehäuseunterteil,
- Fig. 2: eine Draufsicht auf den Halter für Spleiße,
- Fig. 3: eine Unteransicht des Halter für Spleiße und
- Fig. 4: einen Teilschnitt durch das Gehäuseunterteil gemäß der Linie IV - IV in Fig.1 mit noch nicht aufgerastetem Halters für Spleiße.

Das Gehäuse für optische Komponenten besteht aus einem Gehäuseunterteil 2 und einem nicht dargestellten Deckel. Das Gehäuseunterteil 2 ist im wesentlichen in einen vorderen Eingangsbereich 3 mit an die Stirnseite 4 integrierten Ein- und Ausführungen 5,6 für die Glasfasern und einem Niederhalter 49 über einer Bodendurchführung 9 durch das Gehäuseunterteils 2, in einen Zentralbereich 11 mit Haltern 51,52 für Spleiße bzw. Koppler, sowie mit bogenförmigen Umlenkelementen 7 und in einen hinteren Bereich 14 mit bogenförmigen Wandungsteilen 15 zur Führung der Glasfasern sowie einem Niederhalter 16, der über einer Bodendurchführung 17 des Gehäuseunterteils 2 angeordnet ist, aufgegliedert. Die Bereiche 3 und 14 sind so gewählt, daß die Mindestbiegeradien für die Glasfasern bei deren Einführung in die Halter 51,52 für Spleiße bzw. Koppler gewährleistet sind. Aus der Wandung der im hinteren Bereich liegenden Schmalseite 39 ist der Niederhalter 16 über der Bodendurchführung 17 ausgeformt.Die Bodendurchführung 9 ist im Eingangsbereich 3 in gleicher Weise wie die Bodendurchführung 17 des Bereiches 14 ausgeformt und dient der Ein- bzw. Ausführung von Glasfasern z.B. aus einem anderen Gehäuseunterteil 2.

Zwischen den Haltern 51,52 für Spleiße und Koppler sind ein Stift 41, eine Bohrung 42, zwei elliptische Ausformungen 44 und eine Bohrung 45, an deren Rand sich eine zylindrische Wand in Höhe der elliptischen Ausformungen 44 anschließt, angeordnet, die zur Deckelbefestigung und zur Befestigung an einen nicht dargestellten Baugruppenträger bzw. zur Adaption des Gehäuses an die Einbauumgebung dienen. In die elliptische Ausformung 44 sind jeweils eine Bohrung und eine sechskantförmige Senkung eingelassen. Bohrungen 46, die sich in den Ecken der umlaufenden Wandung 47 befinden, dienen ebenfalls der Deckelbefestigung bzw. der Verbindung mehrerer Gehäuseunterteile 2.

Die Einführung 5 ist in die Stirnseite 4 integriert oder als gesondertes Bauteil ausgeführt und in die Stirnseite 4 eingebracht. Hinter der Einführung 5 befindet sich eine Vertiefung 48, in die eine als separates Bauteil ausgeführte Zugentlastung eingesetzt werden kann. Die Zugentlastung besteht vorzugsweise aus zwei miteinander verschraubbaren Platten mit Aussparungen in der Mitte zum Einlegen der Glasfasern. Die Bodendurchführungen 9,17 des Gehäuseunterteils 2 sind als jeweils zur Mitte hin abfallende Schrägen 60 für eine optimale Führung der Glasfasern ausgebildet.

Aus der Wandung 47 sind innen Niederhalter 26 ausgeformt, die zur sicheren Führung der Glasfasern dienen. Zwischen der Wandung 47 und den Haltern 51,52 für Spleiße bzw. Koppler sind jeweils zwei weitere Kabelführungen 27 aus dem Boden des Gehäuseunterteils 2 ausgeformt, die zusammen mit den Niederhaltern 26 im Bereich der Halter 51,52 für Spleiße bzw. Koppler für eine sichere Führung der Glasfasern sorgen.

Die Halter 51,52 für Spleiße bzw. Koppler sind als separate, leicht auswechselbare Bauteile mit jeweils vier Rasten 55 ausgebildet, die in Aussparungen 59 des Boden des Gehäuseunterteils 2 einrastbar sind.

Der Halter 52 für Koppler umfaßt vorzugsweise acht Führungsnuten 24, welche die die Aufnahmen 12 für vorzugsweise acht Koppler bilden. Die Führungsnuten 24 sind durch eine quer zu ihrer Längsrichtung 24 etwa mittig angeordnete Freifläche 25 unterbrochen, die der Aufbringung von Klebematerial dient. Die Koppler werden mittels eines Klebstoff-Films sicher in den Führungsnuten 24 festgelegt. Die Freifläche 25 liegt etwas tiefer als der tiefste Punkt der Führungsnuten 24, so daß über das Einbringen von zweiseitigen Klebefolien eine zusätzliche Kopplerfixierung erzielt werden kann.

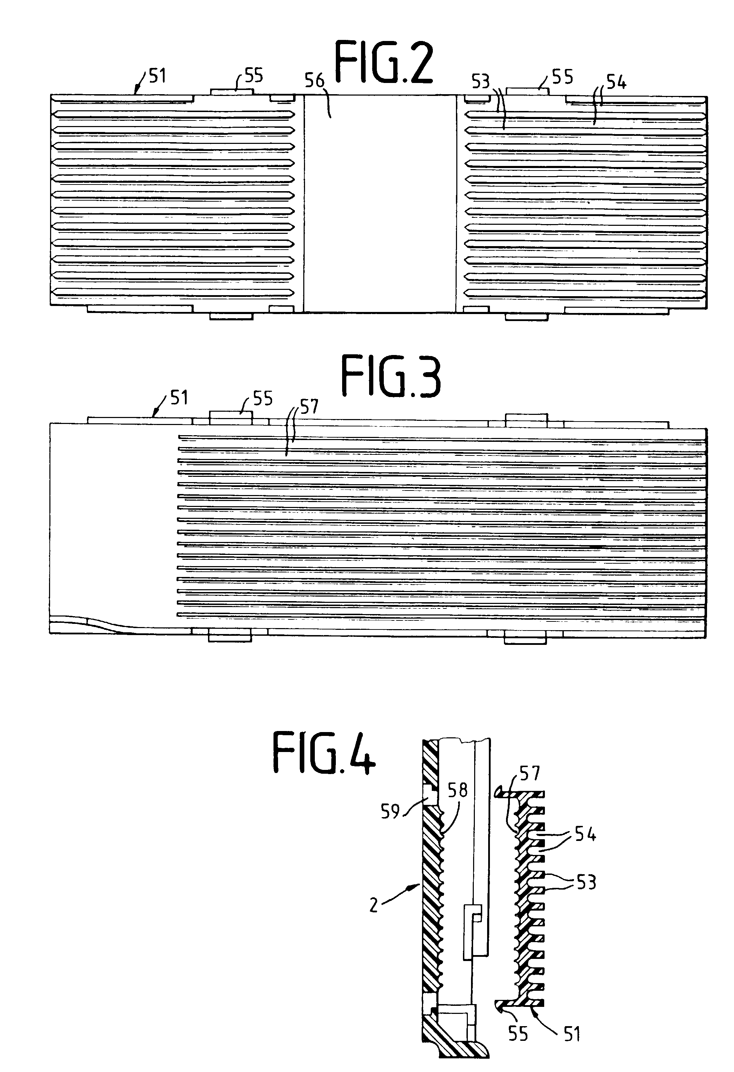

Die Oberseite des in den Fig. 2 bis 4 näher dargestellten Halters 51 für Spleiße besteht aus zwei kammartigen Bereichen, zwischen denen sich eine ebene Freifläche 56 quer über die volle Breite des Halters 51 erstreckt. Jeder kammartige Bereich besteht aus Stegen 53, die parallel zur Längsachse des Halters 51 für Spleiße angeordnet sind und äquidistanten Abstand voneinander aufweisen. Zwischen jeweils zwei Stegen 53 bildet sich eine Nut 54, in die die Glasfaser mit dem Spleißschutz eingelegt wird. Die Stege 53 sind an den Enden V-förmig ausgebildet, um beim Einlegen der Glasfasern die Mindestbiegeradien einzuhalten. Die Bodenflächen der Nuten 54 befinden sich auf gleicher Höhe wie die ebene Freifläche 56. An den Seitenflächen sind jeweils zwei Rasten 55 im Bereich der kammartigen Bereiche angeordnet, die in die passenden Aussparungen 59 im Bodens des Gehäuseunterteils 2 eingerastet werden. Die ebene Freifläche 56 ist mittig angeordnet und erstreckt sich ungefähr über ein Viertel bis ein Fünftel der Gesamtlänge des Halters 51. Die Nuten 54 der beiden kammartigen Bereiche sind zueinander fluchtend angeordnet. Durch den Aufbau des Halters 51 für Spleiße mit zwei kammartigen Bereichen werden eine höhere Packungsdichte für die Ablage der Spleiße und ein Kreuzen von Fasern ohne Unterschreitung von zulässigen Biegeradien ermöglicht. Außerdem entfällt die Notwendigkeit von zusätzlichen Umwegelängen bei z.B. Reparaturspleißen, wo Faserstücke zur Verlängerung eingespleißt werden.

Auf der Unterseite des Halters 51 für Spleiße sind halbkreisförmige Mulden 57 ausgebildet, deren Durchmesser ungefähr dem Durchmesser der Schaltadern entspricht. Zusammen mit halbkreisförmigen Mulden 58, die im Boden des Gehäuseunterteils 2 ausgebildet sind, ergeben sich geschlossene Kanäle (Fig.4), durch die Schaltadern einzeln unterhalb des Halters für Spleiße 51 durchgeführt werden können. Die Unterseite des Halters 52 für Koppler kann analog zur Unterseite des Halters 51 für Spleiße ausgeführt werden.

Durch die Gestaltung der Halter 51,52 für Spleiße bzw. Koppler als separate Bauteile, die auf das Gehäuseunterteil 2 aufrastbar gestaltet sind, wird eine variable Bestückung des Gehäuseunterteils 2 mit Spleißen und Kopplern erreicht. So ist es z.B. möglich, das Gehäuse als reine Spleißkassette auszuführen, indem anstelle des Halters 52 für Koppler ein zweiter Halter 51 für Spleiße in das Gehäuseunterteil 2 aufgerastet wird. Bei der Verwendung von Planarkopplern ist z.B. kein Halter 52 für Koppler notwendig. Wenn die Spleiße nicht in einem speziellen Spleißhalter abgelegt werden müssen, kann auf den Halter 51 für Spleiße verzichtet und an dessen Stelle ein zweiter Halter 52 für Koppler aufgerastet werden, wodurch die Packungsdichte beim Einbau in externe Gehäusekonzepte erhöht werden kann, da dann einfache Bauformen mit höherer Ausgangs- und Eingangsportzahl möglich werden. Durch die V-förmige Ausgestaltung der Stege 53 an den Enden ist eine Einführung der Glasfasern unter Einhaltung der Mindestbiegeradien für Glasfasern möglich. Dies ist insbesondere wichtig, wenn eine Glasfaser aus einer Nut 54 aus dem einen kammartigen Bereich in eine zu dieser nicht fluchtend angeordneten Nut 54 des anderen kammartigen Bereiches eingeführt werden muß.

## Patentansprüche

1. Gehäuse für optische Komponenten, mit einem Gehäuseunterteil und mit einem als separates Bauteil ausgebildeten und auf den Boden des Gehäuseunterteils aufrastbaren Halter für Koppler oder Spleiße,
**dadurch gekennzeichnet,**
daß mehrere Halter (51,52) zur wahlweisen Aufnahme von Spleißen und/oder von Kopplern aufrastbar sind, wobei die Unterseite der Halter (51,52) parallel zu den Führungsnuten (24,54) für die Spleiße oder Koppler auf der Oberseite der Halter (51,52) verlaufende Mulden (57) aufweist, und daß auf dem Boden des Gehäuseunterteils (2) weitere Mulden (58) ausgebildet sind, die zusammen mit den Mulden (57) der Halter (51,52) geschlossene Kanäle bilden.

2. Gehäuse nach Anspruch 1, dadurch gekennzeichnet, daß die Halter (51,52) für Spleiße bzw. Koppler an den Seitenwänden jeweils zwei Rasten (55) aufweisen, die in zugehörige Aussparungen (59) des Bodens des Gehäuseunterteils (2) einrastbar sind.

## Claims

1. Housing for optical components, having a lower housing part and having a holder for couplers or splices, which holder is constructed as a separate structural element and can be latched onto the bottom of the lower housing part, characterized in that a plurality of holders (51, 52) can be latched on for optionally accommodating splices and/or couplers, the underside of the holders (51, 52) having troughs (57), extending parallel to the guide grooves (24, 54), for the splices or couplers on the upper side of the holders (51, 52), and in that there are formed on the bottom of the lower housing part (2) further troughs (58) which form closed channels together with the troughs (57) for the holders (51, 52).

2. Housing according to Claim 1, characterized in that the holders (51, 52) for splices or couplers in each case have two retainers (55) on the side walls, which retainers can latch into associated cutouts (59) in the bottom of the lower housing part (2).

## Revendications

1. Boîtier pour composants optiques, avec une partie inférieure du boîtier et avec une fixation pour coupleurs ou éléments de raccord conçue en tant que composant séparé et susceptible d'être emboîtée sur le fond de la partie inférieure du boîtier, caractérisé en ce que plusieurs fixations (51, 52) sont susceptibles d'être emboîtées pour recevoir au choix des éléments de raccord et/ou des coupleurs, la partie inférieure des fixations (51, 52) présentant des creux (57) s'étendant parallèlement aux rainures de guidage (24, 54) pour les éléments de raccord ou coupleurs sur la surface supérieure des fixations (51, 52), et en ce que des creux (58) supplémentaires sont formés sur le fond de la partie inférieure du boîtier (2), lesquels forment conjointement avec les creux (57) des fixations (51, 52) des canaux fermés.

2. Boîtier selon la revendication 1, caractérisé en ce que les fixations (51, 52) pour les éléments de raccord ou coupleurs présentent sur les parois latérales respectivement deux cliquets (55), qui sont susceptibles d'être emboîtés dans les évidements respectifs (59) du fond de la partie inférieure du boîtier (2).
